# EUROPÄISCHE PATENTSCHRIFT

(11) **EP 3 937 321 B1**
(45) Veröffentlichungstag und Bekanntmachung des Hinweises auf die Patenterteilung: **27.03.2024**
(21) Anmeldenummer: 20184270.5
(22) Anmeldetag: 06.07.2020
(51) Int. Cl.: H02G 3/00, H02G 3/04

(54) **KANALELEMENT, KANAL UND VERFAHREN ZUM INSTALLIEREN EINES KABELS**
CHANNEL ELEMENT, CHANNEL AND METHOD FOR INSTALLING A CABLE
ÉLÉMENT CANAL, CANAL ET PROCÉDÉ D'INSTALLATION D'UN CÂBLE

(43) Veröffentlichungstag der Anmeldung: 12.01.2022
(73) Patentinhaber: Niedax GmbH & Co. KG, 53545 Linz/Rhein (DE)
(72) Erfinder: Tipmann, Andreas, 53545 Linz am Rhein (DE); Schinowski, Thomas, 53545 Linz am Rhein (DE); Discher, Frank Michael, 53545 Linz am Rhein (DE)
(74) Vertreter: Vossius & Partner Patentanwälte Rechtsanwälte mbB

(56) Entgegenhaltungen:
- EP-A1- 2 081 268
- WO-A1-00/36722
- DE-U1-202006 018 568
- GB-A- 2 303 422

## Beschreibung

### GEBIET DER ERFINDUNG

Die Erfindung betrifft ein Kanalelement und ein Verfahren zum Installieren eines Kabels oder mehrerer Kabel. Die Erfindung betrifft insbesondere Kanalelemente und Verfahren, mit denen ein Kabel entlang eines Verkehrswegs, beispielsweise entlang eines Schienenwegs oder entlang einer Straße, installierbar ist.

### HINTERGRUND

Zum Führen von Kabeln, Schläuchen, Rohren etc. können Kanäle eingesetzt werden. Beispielsweise finden so genannte GFK-Kabelkanäle aus glasfaserverstärktem Kunststoff (GFK) Anwendung für die Führung von Kabeln.

Besonders bei langen Kabeln kann es herausfordernd sein, das Kabel in einer Führung zu positionieren, wenn das Kabel nicht segmentiert oder nicht segmentierbar ist, sondern sich durchgängig über eine längere Entfernung erstreckt. Kabelverlegsysteme, die auch für eine Anwendung beispielsweise entlang eines Verkehrswegs geeignet sind, weisen häufig eine komplexe Ausgestaltung auf und/oder sind mit hohem Installationsaufwand verbunden.

Die EP 0 889 657 A2 beschreibt ein Kabelverlegsystem, bei dem Führungsrohre, die von den verlegten Kabeln axial durchsetzt sind, in Kabelschellen eingerastet oder eingeclipst werden. Das Kabelverlegsystem ist nicht einfach unter Verwendung von Verankerungselementen wie beispielsweise Erdankern montierbar, sondern erfordert spezielle Kabelschellen. Die Montage ist zeitaufwändig.

Die DE 34 37 836 A1 offenbart einen Kabeltrog, der für Gleisanlagen ausgestaltet ist. Der Kabeltrog wird durch spezielle Stützen montiert. Ein separater Deckel wird auf ein U-förmiges Element gesetzt und daran befestigt, um einen Kanal zu bilden. Die Montage wird dadurch zeitaufwändig.

Die DE 20 2006 018 568 U1 offenbart eine Kabelaufnahmevorrichtung zur Anordnung an einem Objekt, insbesondere zur Anordnung im Bereich eines mit mindestens einer ersten Kabelanschlusseinrichtung versehenen Abschnitt des Objekts. Die Kabelaufnahmevorrichtung weist mindestens einen von einer Begrenzungsstruktur definierten Aufnahmeraum zur Aufnahme von Kabelabschnitten, insbesondere von Überlängen der Anschlusskabel auf. Die Begrenzungsstruktur weist eine im Gebrauchszustand zum Raum hinweisende, in den Aufnahmeraum führende Einführungsöffnung aufweist, über die die Kabelabschnitte zuführbar sind.

Die WO 00/36722 A1 offenbart eine Kabelhaltevorrichtung mit einem spiralförmigen elastischen Element.

Die GB 2 303 422 A offenbart eine Wandbefestigungsvorrichtung.

Die EP 2 081 268 A1 offenbart einen Kabelkanal mit einer Abdeckung.

### ZUSAMMENFASSUNG DER ERFINDUNG

Es besteht weiterhin Bedarf an verbesserten Bauteilen und Verfahren zum Installieren eines Kabels oder mehrerer Kabel. Es besteht insbesondere Bedarf an Bauteilen und Verfahren, mit denen ein Kanal zum Führen eines Kabels schnell verlegt werden kann und/oder die kein separates Deckelelement zum Schließen des Kanals benötigen.

Erfindungsgemäß werden ein Kanalelement und ein Verfahren mit den in den unabhängigen Ansprüchen definierten Merkmalen angegeben. Die abhängigen Ansprüche definieren bevorzugte Ausführungsformen.

Ein erfindungsgemäßer Kabelkanal ist in Anspruch 1 definiert.

Wenigstens ein Teil des Führungsabschnitts kann eine zum Auflageabschnitt zeigende gekrümmte Innenoberfläche aufweisen.

Die gekrümmte Innenoberfläche kann den Auflageabschnitt bogenartig überdecken.

Wenigstens ein weiterer Teil des Führungsabschnitts kann eine im Wesentlichen planare Form aufweisen.

Der weitere Teil des Führungsabschnitts mit der im Wesentlichen planaren Form kann sich von einem freien Ende des Führungsabschnitts wegerstrecken.

Der weitere Teil des Führungsabschnitts mit der im Wesentlichen planaren Form kann einen Einführkanal zum Einführen des wenigstens einen Kabels an einer Seite begrenzen.

Der Auflageabschnitt kann einen ersten Bereich, der eine Auflagefläche für das Kabel definiert, und einen vom ersten Bereich abragenden zweiten Bereich aufweisen, der die Einführöffnung begrenzt.

Der zweite Bereich des Auflageabschnitts kann einen gekrümmten Abschnitt aufweisen.

Ein freier Endabschnitt des zweiten Bereichs des Auflageabschnitts kann planar oder gekrümmt ausgestaltet sein.

Der zweite Bereich des Auflageabschnitts kann ausgestaltet sein, um eine Bewegung des wenigstens einen Kabels zurück zur Einführöffnung zu verhindern.

Der zweite Bereich des Auflageabschnitts kann den Einführkanal zum Einführen des wenigstens einen Kabels an einer weiteren Seite begrenzen.

Der erste Bereich kann im Wesentlichen planar ausgestaltet sein.

Der erste Bereich kann eine korrugierte Oberfläche aufweisen.

Der Auflageabschnitt kann ein Wasserablaufelement oder mehrere Wasserablaufelemente aufweisen.

Das Wasserablaufelement oder die mehreren Wasserablaufelemente kann bzw. können ein oder mehrere Ablaufrinnen und/oder ein oder mehrere Ablauföffnungen im Auflageabschnitt aufweisen.

Das Kanalelement weist eine Verankerungsöffnung oder mehrere Verankerungsöffnungen auf, durch die jeweils ein Verankerungselement, insbesondere ein in einer Hülse geführtes Verankerungselement, durchführbar ist.

Die Verankerungsöffnung oder die mehreren Verankerungsöffnungen sind über der Einführöffnung angeordnet, d.h., sind im installierten Zustand des Kanalelements vertikal über der Einführöffnung angeordnet.

Der Führungsabschnitt kann einen ebenen Abschnitt aufweisen, in dem die Verankerungsöffnung oder die mehreren Verankerungsöffnungen angeordnet sein kann bzw. können.

Der ebene Abschnitt kann an beiden sich parallel zur Längsachse erstreckenden Enden eine Stufe aufweisen.

Der ebene Abschnitt kann im montierten Zustand des Kabelelements horizontal angeordnet sein.

Das Kanalelement kann ein Eingriffselement oder mehrere Eingriffselemente für einen Eingriff, insbesondere für einen formschlüssigen Eingriff, insbesondere eine Verrastung, mit einem Verbinder aufweisen.

Das Eingriffselement oder die Eingriffselemente kann bzw. können an einer Außenoberfläche des Kanalelements vorgesehen sein.

Das Eingriffselement oder die Eingriffselemente kann bzw. können sich entlang einer Längsachse des Kanalelements erstrecken.

Das Eingriffselement oder die Eingriffselemente kann bzw. können jeweils eine Rastnase oder eine Rastnut aufweisen.

Das Kanalelement kann einen glasfaserverstärkten Kunststoff aufweisen oder aus einem glasfaserverstärkten Kunststoff bestehen.

Das Kanalelement kann einen Kunststoff aufweisen oder aus einem glasfaserverstärkten Kunststoff bestehen.

Das Kanalelement kann ein Metall aufweisen oder aus einem Metall bestehen. Das Metall kann Stahl oder Aluminium sein.

Das Kanalelement kann eine Länge von mindestens 1 m aufweisen.

Der Auflageabschnitt kann eine Breite von 5 mm bis 100 mm quer zur Länge aufweisen.

Das Kanalelement kann aus einem Material mit einer Materialstärke von 1 mm bis 10 mm bestehen.

Der Führungsabschnitt kann sich in jeder transversal zur Längsachse liegenden Querschnittsebene um mindestens 180° um den Auflageabschnitt erstrecken.

Das Kanalelement kann sich in jeder transversal zur Längsachse liegenden Querschnittsebene um mindestens 270° oder um mindestens 360° um eine durch den Auflageabschnitt definierte Mittellinie des Kabels erstrecken.

Das Kanalelement kann in jeder transversal zur Längsachse liegenden Querschnittsebene so ausgestaltet sein, dass jede von einer durch den Auflageabschnitt definierten Mittellinie des Kabels ausgehende, in der Querschnittsebene verlaufende Halbgerade das Kanalelement wenigstens einmal schneidet.

Das Kanalelement kann in jeder transversal zur Längsachse liegenden Querschnittsebene so ausgestaltet sein, dass jede von einer durch den Auflageabschnitt definierten Mittellinie des Kabels ausgehende, in der Querschnittsebene verlaufende Halbgerade das Kanalelement wenigstens einmal und maximal zweimal schneidet.

Das Kanalelement kann im Querschnitt eine im Wesentlichen spiralförmige Grundform aufweisen.

Das Kanalelement kann im Querschnitt eine G-förmige Grundform aufweisen.

Das Kanalelement kann im Querschnitt eine C-förmige Grundform aufweisen.

Das Kanalelement kann ein deckelfreies Kanalelement sein.

Das Kanalelement kann ein GFK-Kabelkanalelement aus glasfaserverstärktem Kunststoff (GFK) sein.

Das Kanalelement kann für eine Verwendung entlang eines Verkehrswegs, insbesondere entlang einer Gleisanlage oder einer Straße, ausgestaltet sein.

Das Kanalelement kann für eine Verwendung im Freien ausgestaltet sein.

Das Kanalelement kann für eine Bodenverankerung ausgestaltet sein.

Das Kanalelement kann für eine wahlweise Montage an einer Wand, einem Boden oder einer Decke ausgestaltet sein.

Ein Verbinder, der bei einem Kanal oder Kit nach einem Ausführungsbeispiel verwendet werden kann, ist für eine Kopplung mit einem ersten und einem zweiten Kanalelementen nach Ausführungsbeispielen der Erfindung ausgestaltet.

Der Verbinder kann ausgestaltet sein, um auf das erste Kanalelement und das zweite Kanalelement aufgeschoben oder aufgeclipst zu werden.

Der Verbinder kann eine über dem ersten Kanalelement positionierbare erste Sichtöffnung zum Überprüfen einer Position des ersten Kanalelements am Verbinder und eine über dem zweiten Kanalelement positionierbare zweite Sichtöffnung zum Überprüfen einer Position des zweiten Kanalelements am Verbinder aufweisen.

Der Verbinder kann eine zwischen der ersten Sichtöffnung und der zweiten Sichtöffnung angeordnete Verbinderverankerungsöffnung zum Durchführen eines Verankerungselements aufweisen.

Ein Innendurchmesser der Verbinderverankerungsöffnung des Verbinders kann im Wesentlichen gleich einem Innendurchmesser der Verankerungsöffnung des Kanalelements sein.

Mittelpunkte der ersten Sichtöffnung, der zweiten Sichtöffnung und der Verbinderverankerungsöffnung können auf einer Geraden angeordnet sein.

Ein Abstand zwischen den Mittelpunkten der ersten Sichtöffnung und der zweiten Sichtöffnung kann so gewählt sein, dass ein Längenausgleich der Kanalelemente berücksichtigt ist.

Die Verbinderverankerungsöffnung kann kreisförmig sein.

Die erste Sichtöffnung und die zweite Sichtöffnung können elliptisch oder kreisförmig sein.

Der Verbinder kann einen ebenen Verbinderabschnitt aufweisen, in dem die Verbinderverankerungsöffnung oder die mehreren Verbinderverankerungsöffnungen angeordnet sein kann bzw. können.

Der ebene Verbinderabschnitt kann an beiden sich parallel zur Längsachse erstreckenden Enden eine Stufe aufweisen.

Der ebene Verbinderabschnitt kann im montierten Zustand des Verbinders horizontal angeordnet sein.

Der Verbinder kann ein Verbindereingriffselement oder mehrere Verbindereingriffselemente für einen Eingriff, insbesondere für einen formschlüssigen Eingriff, insbesondere eine Verrastung, mit dem ersten Kanalelement und dem zweiten Kanalelement aufweisen.

Das Verbindereingriffselement oder die Verbindereingriffselemente kann bzw. können an einer Innenoberfläche des Verbinders vorgesehen sein.

Das Verbindereingriffselement oder die Verbindereingriffselemente können mit dem Eingriffselement bzw. den Eingriffselementen des ersten Kanalelements und des zweiten Kanalelements in Eingriff bringbar sein.

Der Verbinder kann im Querschnitt eine C-förmige Grundform aufweisen.

Der Verbinder kann einen glasfaserverstärkten Kunststoff aufweisen oder aus einem glasfaserverstärkten Kunststoff bestehen.

Der Verbinder kann einen Kunststoff aufweisen oder aus einem glasfaserverstärkten Kunststoff bestehen.

Der Verbinder kann ein Metall aufweisen oder aus einem Metall bestehen. Das Metall kann Stahl oder Aluminium sein.

Der Verbinder kann eine Markierung aufweisen, anhand der erkennbar ist, welche(s) Kabel in einem Kanal verlegt ist. Die Markierung kann eine Farbe oder Einfärbung des Verbinders sein. Verbinder mit unterschiedlichen Farben können für unterschiedliche Arten von Kabeln verwendet werden.

Eine Hülse nach einem Ausführungsbeispiel ist so ausgestaltet, dass sie in die Verankerungsöffnung des Kanalelements nach einem Ausführungsbeispiel und/oder in die Verbinderverankerungsöffnung des Verbinders nach einem Ausführungsbeispiel einführbar ist.

Die Hülse kann eine Mittelachse und eine sich entlang der Mittelachse erstreckende Durchführung für ein Verankerungselement, insbesondere einen Bodenanker aufweisen.

Die Hülse kann einen Kragen aufweisen.

Der Kragen kann einen Außendurchmesser aufweisen, der größer als ein Innendurchmesser der Verankerungsöffnung des Kanalelements und/oder als ein Innendurchmesser der Verbinderverankerungsöffnung des Verbinders ist.

Ein erfindungsgemäßer Kanal weist ein erstes Kanalelement nach einem Ausführungsbeispiel, ein zweites Kanalelement nach einem Ausführungsbeispiel und einen Verbinder auf, der für eine Kopplung mit dem ersten Kanalelement und dem zweiten Kanalelement ausgestaltet ist.

Der Verbinder kann eine über dem ersten Kanalelement positionierte erste Sichtöffnung zum Überprüfen einer Position des ersten Kanalelements am Verbinder und eine über dem zweiten Kanalelement positionierte zweite Sichtöffnung zum Überprüfen einer Position des zweiten Kanalelements am Verbinder aufweisen.

Der Verbinder kann eine zwischen der ersten Sichtöffnung und der zweiten Sichtöffnung angeordnete Verbinderverankerungsöffnung zum Durchführen eines Verankerungselements, insbesondere eines in einer Hülse geführten Verankerungselements, aufweisen.

Ein Innendurchmesser der Verbinderverankerungsöffnung des Verbinders kann im Wesentlichen gleich einem Innendurchmesser der Verankerungsöffnung des Kanalelements sein.

Mittelpunkte der ersten Sichtöffnung, der zweiten Sichtöffnung und der Verbinderverankerungsöffnung können auf einer Geraden angeordnet sein.

Die Verbinderverankerungsöffnung kann kreisförmig sein.

Die erste Sichtöffnung und die zweite Sichtöffnung können elliptisch oder kreisförmig sein.

Der Verbinder kann so auf dem ersten Kanalelement positioniert sein, dass ein Rand des ersten Kanalelements in der ersten Sichtöffnung, insbesondere mittig in der ersten Sichtöffnung, positioniert ist.

Der Verbinder kann so auf dem zweiten Kanalelement positioniert sein, dass ein Rand des zweiten Kanalelements in der zweiten Sichtöffnung, insbesondere mittig in der zweiten Sichtöffnung, positioniert ist.

Der Verbinder kann ein Verbindereingriffselement oder mehrere Verbindereingriffselemente für einen Eingriff, insbesondere für einen formschlüssigen Eingriff, insbesondere eine Verrastung, mit dem ersten Kanalelement und dem zweiten Kanalelement aufweisen.

Das Verbindereingriffselement oder die Verbindereingriffselemente kann bzw. können an einer Innenoberfläche des Verbinders vorgesehen sein, wobei das Verbindereingriffselement bzw. die Verbindereingriffselemente mit dem Eingriffselement bzw. den Eingriffselementen des ersten Kanalelements und des zweiten Kanalelements in Eingriff bringbar sind oder in Eingriff stehen.

Der Kanal kann mindestens ein Verankerungselement zur Verankerung des ersten Kanalelements, des zweiten Kanalelements und des Verbinders aufweisen.

Der Kanal kann ferner mindestens eine Hülse zum Durchführen des mindestens einen Verankerungselements durch das erste Kanalelement, das zweite Kanalelements oder den Verbinder aufweisen.

Der Kanal kann entlang eines Verkehrswegs, insbesondere entlang einer Gleisanlage, verlegt sein.

Der Kanal kann ein darin geführtes Kabel aufweisen.

Der Kanal kann ein GFK-Kanal sein.

Erfindungsgemäß wird ein Verfahren zum Installieren eines Kabels oder mehrerer Kabel in einem Kabelkanal in Anspruch 14 angegeben.

Das Kanalelement kann um wenigstens 90°, wenigstens 180° oder um wenigstens 250° gedreht werden, um das Kabel zum Auflageabschnitt zu führen.

Das Verfahren kann ein Befestigen des Kanalelements an einem weiteren Kanalelement unter Verwendung eines Verbinders aufweisen.

Der Verbinder kann eine erste Sichtöffnung zum Überprüfen einer Position des Kanalelements am Verbinder und eine weitere Sichtöffnung zum Überprüfen einer Position des weiteren Kanalelements am Verbinder aufweisen.

Bei dem Verfahren kann der Verbinder so auf dem ersten Kanalelement positioniert werden, dass ein Rand des ersten Kanalelements in der ersten Sichtöffnung, insbesondere mittig in der ersten Sichtöffnung, positioniert ist.

Bei dem Verfahren kann der Verbinder so auf dem zweiten Kanalelement positioniert werden, dass ein Rand des zweiten Kanalelements in der zweiten Sichtöffnung, insbesondere mittig in der zweiten Sichtöffnung, positioniert ist.

Das Verfahren kann ein Verankern des Verbinders aufweisen. Dabei kann ein Verankerungselement durch eine zwischen der ersten Sichtöffnung und der zweiten Sichtöffnung angeordnete Verbinderverankerungsöffnung geführt werden.

Das Verfahren kann ein Durchführen einer Hülse durch den Verbinder und ein Durchführen des Verankerungselements durch die Hülse aufweisen.

Das Verankerungselement kann ein Bodenanker oder eine Schraube sein.

Das Verfahren kann ein Verankern des ersten Kanalelements und des zweiten Kanalelements aufweisen. Dabei können ein oder mehrere weitere Verankerungselemente durch das erste Kanalelement und ein oder mehrere weitere Verankerungselemente durch das erste Kanalelement durchgeführt werden.

Das Verfahren kann ein Durchführen ein oder mehrerer weiterer Hülsen durch das erste Kanalelement, ein Durchführen ein oder mehrerer weiterer Hülse durch das zweite Kanalelement und ein Durchführen der weiteren Verankerungselemente durch die weiteren Hülse aufweisen.

Das weitere Verankerungselement kann ein Bodenanker oder eine Schraube sein.

Die weiteren Verankerungselemente, optional in Kombination mit den weiteren Hülsen, können das Kabel oder die mehreren Kabel am ersten und zweiten Kabelkanalelement sichern.

Die weiteren Verankerungselemente, optional in Kombination mit den weiteren Hülsen, können das Kabel oder die mehreren Kabel derart am ersten und zweiten Kabelkanalelement sichern, dass ein Durchtritt des im Kanal geführten Kabels oder der mehreren Kabel durch die Einführöffnung unterbunden wird.

Mit dem Verfahren kann der Kabelkanal verlegt werden, indem
- ein Kanalelement um das bereits ausgelegte Kabel oder die ausgelegten Kabel gedreht wird, so dass das Kabel oder die Kabel im Kanalelement zum Auflageabschnitt gleiten;
- ein Verbinder auf das Kanalelement geschoben oder geclipst wird; und
- die beiden oben genannten Schritte wiederholt werden, wobei sequenziell neue Kanalelemente und Verbinder hinzugefügt werden können.

Bei dem Verfahren können die Kanalelemente nach Drehung und die Verbinder jeweils verankert werden, indem eine Hülse von oben eingebracht und das Verankerungselement durch die Hülse im Boden oder an einem anderen Träger befestigt wird.

Mit dem Verfahren kann ein Kabelkanal entlang eines Verkehrswegs, insbesondere entlang einer Gleisanlage, verlegt werden.

Mit dem Verfahren kann ein Kabelkanal verlegt werden, der einen Schutz vor mechanischer Fremdeinwirkung und/oder UV-Strahlung bildet, ohne dass ein separates Deckelelement an den Kanalelementen angebracht werden muss.

Der bzw. die bei dem Verfahren verwendete(n) Verbinder können jeweils Verbinder eines Kanals oder Kits nach einem Ausführungsbeispiel sein.

Die bei dem Verfahren verwendete(n) Hülse(n) können jeweils Hülsen eines Kanals nach einem Ausführungsbeispiel sein.

Die Bauteile, der Kabelkanal und die Verfahren nach Ausführungsbeispielen erzielen verschiedene Wirkungen. Die Bauteile, die Kits, der Kabelkanal und die Verfahren nach Ausführungsbeispielen erlauben es, einen Kabelkanal schnell und effizient zu verlegen. Die Bauteile, der Kabelkanal und die Verfahren nach Ausführungsbeispielen ermöglichen die Verlegung eines Kabelkanals, ohne dass ein separates Deckelelement an den Kanalelementen angebracht werden muss. Die verwendeten Bauteile haben eine einfache Ausgestaltung. Insbesondere kann ein einstückiges Kanalelement so ausgebildet sein, dass durch eine Drehung um seine Längsachse ein Kabel oder mehrere Kabel zu einem Aufnahmeabschnitt gleitet bzw. gleiten, in dem das Kabel oder die Kabel gehalten werden.

### KURZBESCHREIBUNG DER FIGUREN

Die Erfindung wird nachfolgend unter Bezugnahme auf die Figuren detailliert beschrieben, in denen ähnliche oder identische Bezugszeichen ähnliche oder identische Elemente bezeichnen.
Fig. 1 ist eine perspektivische Teilansicht eines Kanalelements nach einem Ausführungsbeispiel.
Fig. 2 ist eine weitere perspektivische Teilansicht des Kanalelements.
Fig. 3 ist eine Querschnittsansicht des Kanalelements.
Fig. 4 ist eine Querschnittsansicht des Kanalelements mit eingesetzter Hülse.
Fig. 5 ist eine Querschnittsansicht des Kanalelements mit eingesetzter Hülse und Verankerungselement.
Fig. 6 ist eine Seitenansicht der Hülse.
Fig. 7 ist eine Querschnittsansicht des Kanalelements mit eingesetzter Hülse.
Fig. 8 ist eine Perspektivansicht eines Verbinders zum Verbinden von Kanalelementen.
Fig. 9 ist eine Querschnittsansicht des Verbinders.
Fig. 10 ist eine Draufsicht eines Kanals.
Fig. 11 ist eine perspektivische Teilansicht des Kanals.
Fig. 12 ist eine weitere perspektivische Teilansicht des Kanalelements mit eingesetzter Hülse und Verankerungselement.
Fig. 13 ist eine Querschnittsansicht des Kanals entlang einer Linie XIII-XIII in Fig. 10.
Fig. 14 ist eine Querschnittsansicht eines Verbinders und Kanalelements nach einem weiteren Ausführungsbeispiel.
Fig. 15A-F ist eine Darstellung eines Bewegungsablaufs bei Installation eines Kabels.
Fig. 16 ist eine Querschnittsansicht des Kanals mit eingesetzter Hülse und Verankerungselement.
Fig. 17 ist eine schematische Darstellung zur Veranschaulichung von Verwendungsmöglichkeiten der Bauteile nach Ausführungsbeispielen.
Fig. 18 ist eine Querschnittsansicht eines Kanalelements nach einem weiteren Ausführungsbeispiel.

### DETAILLIERTE BESCHREIBUNG VON AUSFÜHRUNGSBEISPIELEN

Während Ausführungsbeispiele im Kontext eines Kanals beschrieben werden, in dem ein Kabel (beispielsweise ein elektrisches Kabel mit einem leitenden Kern und einem Mantel oder ein Lichtwellenleiter mit einer optischen Faser oder mehreren optischen Fasern und einem Mantel) geführt ist, können die Bauteile und Verfahren auch zum Führen von Rohren, Schläuchen oder anderen länglichen Elementen eingesetzt werden.

Während Ausführungsbeispiele im Kontext eines Kanals beschrieben werden, in dem ein Kabel geführt ist, können die Bauteile und Verfahren auch zum Führen von mehreren Kabeln eingesetzt werden.

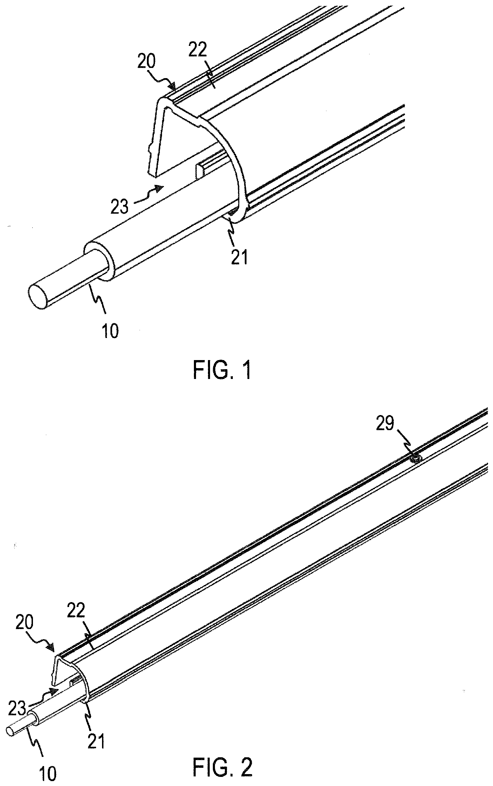

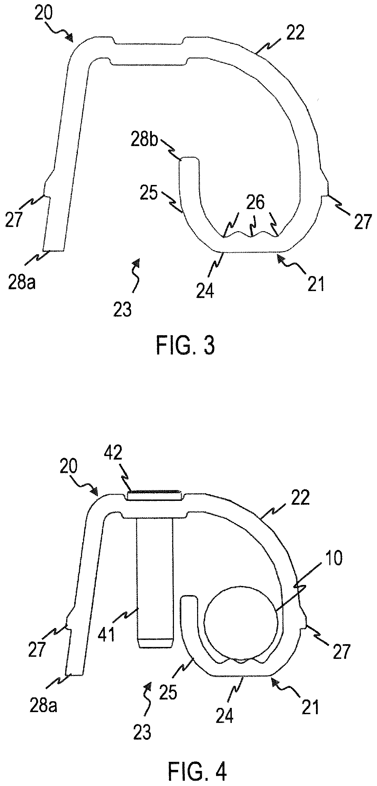

Fig. 1 und Fig. 2 zeigen perspektivische Teilansichten eines Kanalelements 20. Fig. 3 zeigt eine Schnittansicht des Kanalelements 20 in einer Querschnittsebene senkrecht zu einer Längsachse des Kanalelements 20. Das Kanalelement 20 ist als ein einstückiges Bauteil ausgebildet. Das Kanalelement 20 kann beispielsweise aus einem glasfaserverstärkten Kunststoff (GFK) bestehen und ein GFK-Kanalelement sein. Alternativ kann das Kanalelement 20 aus Kunststoff oder einem Metall, beispielsweise Stahl oder Aluminium bestehen.

Das Kanalelement 20 kann so geformt sein, dass es in einer Querschnittsebene senkrecht zur Längsachse eine im Wesentlichen spiralförmige Grundform aufweist.

Das Kanalelement 20 weist einen Auflageabschnitt 21 für wenigstens ein Kabel 10 auf. Das Kanalelement 20 weist einen Führungsabschnitt 22 auf, der den Auflageabschnitt 21 überdeckt und einstückig mit dem Auflageabschnitt 21 ausgebildet ist. Der Führungsabschnitt 22 ist so ausgestaltet, dass bei Drehung des Kanalelements 20 um seine Längsachse ein Kabel von einer Einführöffnung 23 entlang der Innenseite des Führungsabschnitts 22 zum Auflageabschnitt 21 gleitet.

Das Kanalelement 20 kann so geformt sein, dass die Einführöffnung 23 seitlich versetzt neben dem Aufnahmeabschnitt 21 angeordnet ist, an dem das Kabel 10 aufliegt.

Die Einführöffnung 23 kann zwischen dem Führungsabschnitt 22 und dem Auflageabschnitt 21 gebildet sein, so dass die Einführöffnung seitlich versetzt zum Auflageabschnitt 21 angeordnet ist. Die Einführöffnung 23 kann sich entlang einer gesamten Länge des Kanalelements 20 erstrecken.

Der Auflageabschnitt 21 ist so ausgestaltet, dass das Kabel 10 auf ihm aufliegen kann. Der Auflageabschnitt 21 kann einen ersten Bereich 24 aufweisen, der eine Auflagefläche für das Kabel 10 bildet. Der erste Bereich 24 kann im Wesentlichen eben ausgebildet sein. Im verlegten Zustand kann sich der erste Bereich 24 in einer im Wesentlichen horizontalen Ebene erstrecken.

Der Auflageabschnitt 21 kann einen zweiten Bereich 25 aufweisen, der eine seitliche Anlagefläche für das Kabel 10 bilden kann. Der zweite Bereich 25 kann wenigstens einen gekrümmten, insbesondere einen in der Querschnittsansicht bogenförmig gekrümmten Teil aufweisen, der in einen geraden oder gekrümmten Teil an einem freien Ende 28b des Kanalelements 20 ausläuft.

Der zweite Bereich 25 kann so ins Innere des Kanalelements 20 hineinragen, dass er mithilft zu verhindern, dass das eingeführte Kabel 10 zurück zur Einführöffnung 23 rutscht.

Der erste Bereich 24 und der zweite Bereich 25 können sich translationssymmetrisch entlang der Länge des Kanalelements 20 erstrecken.

Im ersten Bereich 24 können ein oder mehrere Flüssigkeitsablaufelemente, insbesondere Ablaufrinnen 26 und/oder Ablaufdurchbrüche vorgesehen sein. Der erste Bereich 24 kann eine ins Innere des Kanalelements 20 weisende korrugierte Oberfläche aufweisen, die beispielsweise Ablaufrinnen 26 definiert. Dabei kann der Auflageabschnitt 21 eine, zwei, drei oder mehr als drei Ablaufrinnen 26 aufweisen.

Der Führungsabschnitt 22 kann sich von einem freien Ende 28a bogenförmig über die Einführöffnung und den Auflageabschnitt 21 erstrecken, wenn die Auflagefläche des Auflageabschnitts horizontal ausgerichtet ist. Der Führungsabschnitt 22 kann so geformt sein, dass das Kanalelement 20 in einer Querschnittsebene senkrecht zur Längsachse eine im Wesentlichen spiralförmige Grundform aufweist.

Der Führungsabschnitt 22 kann einen sich vom freien Ende 28a des Führungsabschnitts 22 weg erstreckenden, im Wesentlichen planaren Abschnitt aufweisen. Der (in Fig. 3 bis Fig. 5 an der linken Seite) dargestellte planare Abschnitt, der sich vom freien Ende 28a weg erstreckt, kann so ausgestaltet sein, dass er auf eine Auflagefläche gelegt werden kann, auf der das Kabel 10 bereits ausgelegt ist, um das Kabel einzuführen.

Der Führungsabschnitt 22 kann einen (in Fig. 3 bis Fig. 5 oben dargestellten) weiteren planaren Abschnitt aufweisen, der an einer Oberseite des Kanalelements 20 ist. In dem weiteren planaren Abschnitt ist eine Verankerungsöffnung 29 vorgesehen. In dem weiteren planaren Abschnitt können mehrere Verankerungsöffnungen 29 vorgesehen sein. Die Verankerungsöffnung(en) sind so bemessen, dass ein in einer Hülse geführtes Verankerungselement in sie eingesetzt werden kann, wie nachfolgend noch ausführlicher beschrieben wird. Die Verankerungsöffnung(en) 29 ist bzw. sind so angeordnet, dass sie vertikal über der Einführöffnung 23 positioniert ist bzw. sind, wenn das Kanalelement 20 am Boden montiert wird.

Der Führungsabschnitt 22 kann eine gekrümmte, insbesondere hohlzylindersegmentartig gekrümmte Fläche aufweisen, die sich über den Aufnahmeabschnitt 21 spannt.

Im Gebrauch des Kabelelements 20 wird bzw. werden zur Befestigung des Kabelelements 20 ein Verankerungselement 45 oder mehrere Verankerungselemente 45 durch die Verankerungsöffnung(en) 29 eingebracht und am Boden oder einer anderen Montageposition befestigt.

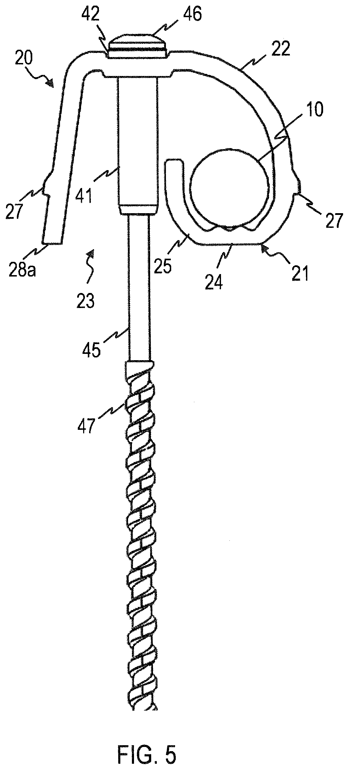

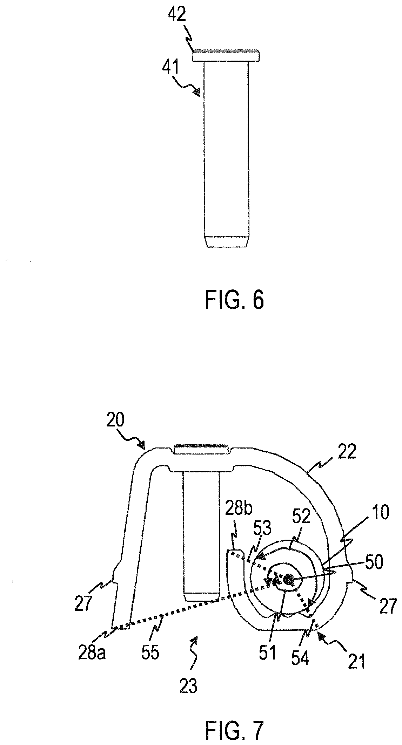

Fig. 4 zeigt eine Querschnittsansicht mit in die Verankerungsöffnung 29 eingebrachter Hülse 41. Fig. 5 zeigt eine Querschnittsansicht mit dem durch die Hülse 41 geführten Verankerungselement 45. Fig. 6 zeigt eine Seitenansicht der Hülse 41.

Die Hülse 41 weist einen Kragen 42 auf, dessen Außendurchmesser größer als ein Innendurchmesser der Verankerungsöffnung 29 ist. Die Hülse 41 ist so dimensioniert, dass ein zylinderförmiger Körperabschnitt, aber nicht der Kragen 42 in die Verankerungsöffnung 29 eingeführt werden kann. Die Hülse 41 weist einen sich entlang ihrer gesamten Länge erstreckenden Durchgang auf, durch den das Verankerungselement 45 durchgeführt werden kann.

Das Verankerungselement 45 kann ein Bodenanker oder eine Schraube sein, ohne hierauf beschränkt zu sein. Das Verankerungselement 45 kann einen Gewindeabschnitt 47 aufweisen. Das Verankerungselement 45 kann einen Kopf 46 aufweisen. Ein Außendurchmesser des Kopfs 46 ist größer als ein Innendurchmesser des Durchgangs der Hülse 41. Der Außendurchmesser des Kopfs 46 kann an den Außendurchmesser des Kragens 42 angepasst, insbesondere gleich sein.

Die Hülse 41 und/oder das Verankerungselement 45 können mithelfen, ein Zurückgleiten des Kabels 10 zur Einführöffnung 23 zu verhindern. Beispielsweise kann, wie in Fig. 7 dargestellt, die Hülse 41 eine Länge aufweisen, die sicherstellt, dass sich die Hülse 41 im in der Verankerungsöffnung 29 montierten Zustand so weit erstreckt, dass sie neben dem zweiten Bereich 25 des Auflageabschnitts 21 angeordnet ist. Die Hülse 41 kann sich bis in die Einführöffnung 23 erstrecken.

Zum Schutz des Kabels 10, beispielsweise vor mechanischer Fremdeinwirkung und/oder UV-Strahlung, kann sich das Kanalelement 20 spiralartig um das Kabel 10 erstrecken. Eine Position einer Mittelinie 50 des Kabels 10 kann durch den Aufnahmeabschnitt 21 definiert werden (beispielsweise als Schnittlinie einer mittig durch den ersten Bereich 24 verlaufenden Vertikallinie und einer mittig durch den zweiten Bereich 25 verlaufenden Horizontallinie).

Das Kanalelement 20 kann so ausgestaltet sein, dass sich das Kanalelement 20 in einer Querschnittsebene senkrecht zur Längsachse vom freien Ende 28b zum entgegengesetzten freien Ende 28a um einen Winkel 51 erstreckt, der mindestens 180°, mindestens 270° oder mindestens 360° sein kann. Der Winkel 51 kann gemessen werden als der Winkel, den das Kanalelement 20 relativ zur Mittellinie 50 zwischen einer ersten Linie 53, die die Mittellinie 50 des Kabels 10 mit dem freien Ende 28b verbindet, bis zu einer zweiten Linie 55 überstreicht, die die Mittellinie 50 des Kabels 10 mit dem freien Ende 28b verbindet.

Das Kanalelement 20 kann so ausgestaltet sein, dass sich der Führungsabschnitt 22 in einer Querschnittsebene senkrecht zur Längsachse vom mit dem Auflageabschnitt 21 verbundenen Ende zum entgegengesetzten freien Ende 28a des Führungsabschnitts 22 um einen weiteren Winkel 52 erstreckt, der mindestens 90°, mindestens 120° oder mindestens 180° sein kann. Der weitere Winkel 52 kann gemessen werden als der Winkel, den das Kanalelement 20 relativ zur Mittellinie 50 zwischen einer ersten Linie 54, die die Mittellinie 50 des Kabels 10 mit dem Ende des horizontalen Bereichs 24 des Auflageabschnitts 21 verbindet, bis zur zweiten Linie 55 überstreicht, die die Mittellinie 50 des Kabels 10 mit dem freien Ende 28b verbindet.

Ein Kabelkanal kann gebildet werden, indem mehrere Kanalelemente 20 mit Verbindern 30 aneinander befestigt werden. Die Verbinder 30 können auf jeweils zwei benachbarte Kanalelemente 20 aufgeschoben oder aufgeclipst werden.

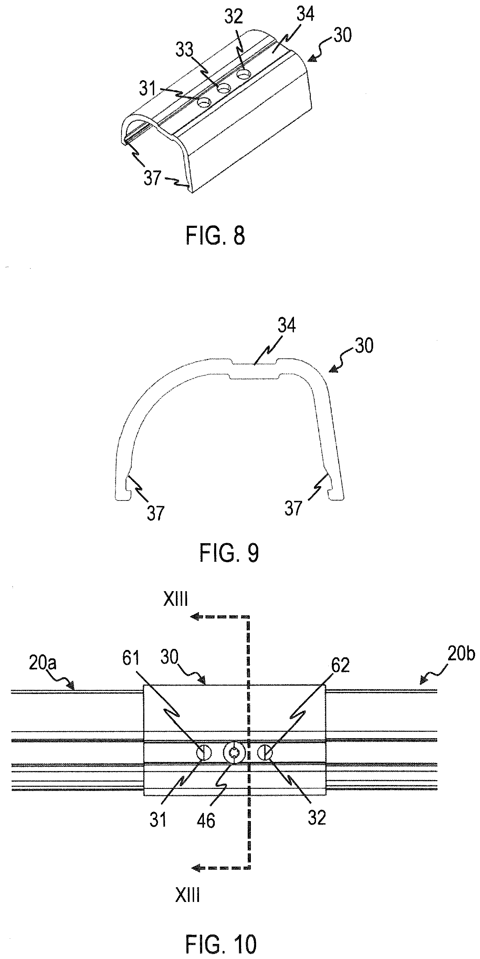

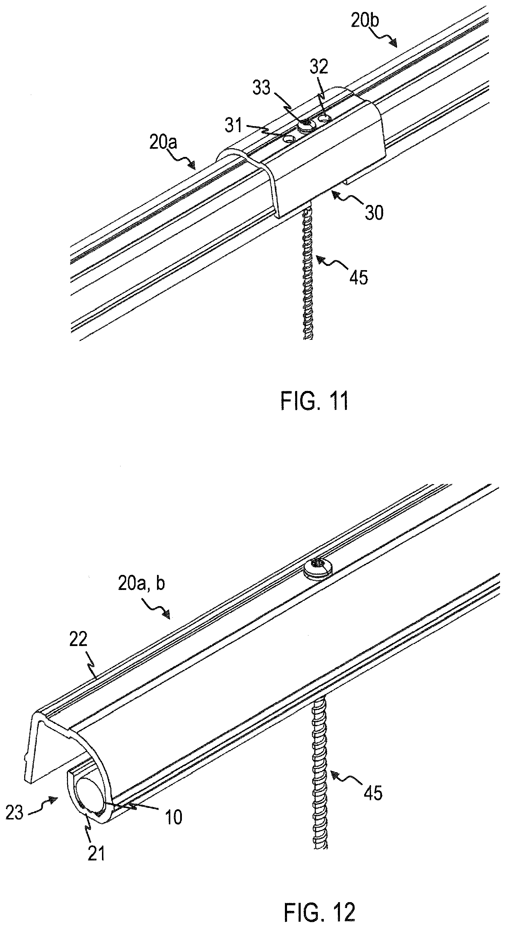

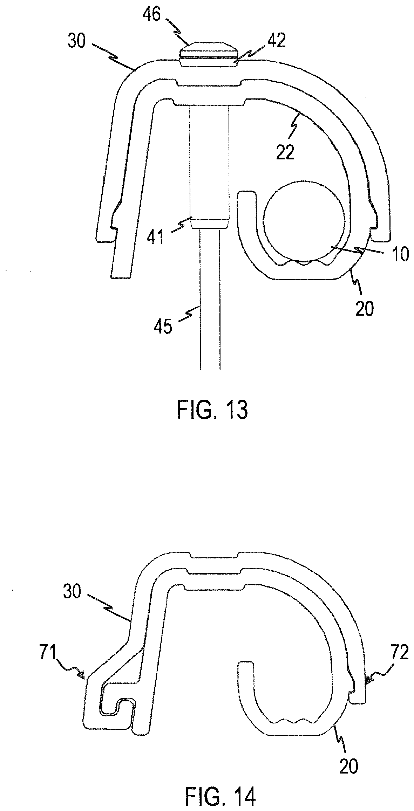

Fig. 8 zeigt eine Perspektivansicht eines Verbinders 30. Fig. 9 zeigt eine Querschnittsansicht des Verbinders 30. Fig. 10 zeigt eine Draufsicht eines Kabelkanals mit mehreren Kanalelementen 20a, 20b und einem diese verbindenden Verbinder 30. Fig. 11 zeigt eine perspektivische Teilansicht des Kabelkanals mit den mehreren Kanalelementen 20a, 20b und dem diese verbindenden Verbinder 30. Fig. 12 zeigt eine perspektivische Teilansicht der Kanalelemente 20a, 20b im Kabelkanal. Fig. 13 zeigt eine Schnittansicht entlang einer Linie XIII-XIII in Fig. 10.

Der Verbinder 30 kann eine im Wesentlichen bogenförmige Grundform aufweisen. Der Verbinder 30 kann ausgestaltet sein, um formschlüssig auf die Kanalelemente 20a, 20b gesetzt zu werden.

Der Verbinder 30 kann zwei Seitenwände aufweisen, die flexibel sein können, um ein Aufclipsen des Verbinders auf ein oder mehrere Kanalelemente 20a, 20b zu ermöglichen.

Der Verbinder 30 kann so ausgestaltet sein, dass benachbarte Kanalelemente 20a, 20b des Kabelkanals durch den Verbinder miteinander gekoppelt und das geführte Kabel von dem Verbinder 30 überdeckt wird. Dies kann so geschehen, dass die benachbarten Kanalelemente 20a, 20b einander nicht berühren. Dadurch kann eine Verankerungselement 45 durch den Verbinder 30 im Zwischenraum zwischen den benachbarten Kanalelementen 20a, 20b eingeführt werden.

Der Verbinder 30 kann eine erste Sichtöffnung 31, eine zweite Sichtöffnung 32 und eine dazwischen positionierte Verbinderverankerungsöffnung 33 aufweisen. Im verlegten Zustand das Kabelkanals kann der Verbinder 30 so an dem ersten Kanalelement 20a positioniert sein, dass ein Rand 61 des ersten Kanalelements 20a unterhalb der ersten Sichtöffnung 31 angeordnet und durch diese sichtbar ist. Im verlegten Zustand das Kabelkanals kann der Verbinder 30 so an dem zweiten Kanalelement 20b positioniert sein, dass ein Rand 62 des zweiten Kanalelements 20b, der dem ersten Kanalelement 20a zugeordnet ist, unterhalb der zweiten Sichtöffnung 32 angeordnet und durch diese sichtbar ist.

Mittelpunkte der ersten Sichtöffnung 31, der zweiten Sichtöffnung 32 und der Verbinderverankerungsöffnung 33 können auf einer Geraden angeordnet sein. Die Verbinderverankerungsöffnung 33 kann kreisförmig sein. Die erste Sichtöffnung 31 und die zweite Sichtöffnung 32 können elliptisch oder kreisförmig sein. Dadurch kann eine mittige Positionierung der Ränder 61, 62 in den Sichtöffnungen 31, 32 leicht visuell überprüft werden. Andere Formen können für die Sichtöffnungen 31, 32 verwendet werden. Die Sichtöffnungen 31, 32 weisen vorteilhaft eine sich in Längsrichtung des Verbinders 30 verändernde Breite quer zur Längsrichtung auf, wobei die Breite der Sichtöffnungen an der Sollposition der Ränder 61, 62 ein Extremum aufweisen kann, vorteilhaft maximal ist.

Der Verbinder kann einen ebenen Verbinderabschnitt 34 aufweisen, in dem die Verbinderverankerungsöffnung 33 oder mehrere Verbinderverankerungsöffnungen 33 angeordnet sein kann bzw. können. Der ebene Verbinderabschnitt 34 kann an beiden sich parallel zur Längsachse des Verbinders 30 erstreckenden Enden eine Stufe aufweisen (vgl. Fig. 10). Die Höhe der Stufe kann an eine Höhe des Kragens 42 der Hülse 41 angepasst sein und größer oder im Wesentlichen gleich der Höhe des Kragens 42 sein. Der ebene Verbinderabschnitt 34 kann im montierten Zustand des Verbinders 30 horizontal angeordnet sein.

Verankerungselemente 45 und Hülsen 41 mit identischer Konstruktion können zur Verankerung der Kanalelemente 20a, 20b und des Verbinders 30 verwendet werden. Dadurch wird die Anzahl benötigter Bauteile verringert. Die Lagerhaltung wird vereinfacht.

Wie in Fig. 5, Fig. 11, Fig. 12 und Fig. 13 dargestellt, sind sowohl die Verankerungsöffnung 29 der Kanalelemente 20a, 20b als auch die Verbinderverankerungsöffnung 33 des Verbinders 30 so ausgestaltet, dass die Hülse 41 in sie eingeführt und das Verankerungselement 45 anschließend durch den Durchgang der Hülse 41 durchgeführt werden kann. Ein Innendurchmesser der Verankerungsöffnung 29 der Kanalelemente 20a, 20b kann im Wesentlichen gleich einem Innendurchmesser der Verbinderverankerungsöffnung 33 des Verbinders 30 sein.

Für eine sichere, aber reversibel zerstörungsfrei lösbare Verbindung des Verbinders 30 und der Kanalelemente 20a, 20b aneinander können der Verbinder 30 und jedes Kanalelement 20, 20a, 20b korrespondierende Eingriffselemente aufweisen. Die Eingriffselemente können für einen formschlüssigen Eingriff, insbesondere für eine Verrastung ausgestaltet sein.

Jedes Kanalelement 20, 20a, 20b kann ein Eingriffselement 27 oder mehrere Eingriffselemente 27 aufweisen. Das Eingriffselement 27 oder die Eingriffselemente 27 können an einer Außenseite des Kanalelements 20, 20a, 20b vorgesehen sein. Das Eingriffselement 27 oder die Eingriffselemente 27 können männliche oder weibliche Eingriffselemente sein. Das Eingriffselement 27 oder die Eingriffselemente 27 können Rastnasen oder Rastnuten sein, ohne hierauf beschränkt zu sein.

Das Eingriffselement 27 oder die Eingriffselemente 27 können sich in Längsrichtung entlang der gesamten Länge der Kanalelemente 20, 20a, 20b erstrecken. Dadurch wird eine Konfektionierung, beispielsweise durch Zuschneiden auf beliebige Längen, erleichtert.

Der Verbinder 30 kann ein Verbindereingriffselement 37 oder mehrere Verbindereingriffselemente 37 aufweisen. Das Verbindereingriffselement 37 oder die Verbindereingriffselemente 37 können an einer Innenseite des Verbinders 30 vorgesehen sein. Das Verbindereingriffselement 37 oder die Verbindereingriffselemente 37 können zu den Eingriffselementen 27 korrespondierende weibliche oder männliche Verbindereingriffselemente sein. Das Verbindereingriffselement 37 oder die Verbindereingriffselemente 37 können Rastnuten oder Rastnasen sein, ohne hierauf beschränkt zu sein.

Das Verbindereingriffselement 37 oder die Verbindereingriffselemente 37 können sich in Längsrichtung entlang der gesamten Länge des Verbinders 30 erstrecken. Dadurch wird ermöglicht, dass der Verbinder 30 wahlweise in Längsrichtung über ein Kanalelement 20, 20a, 20b geschoben oder darauf augeclipst werden kann, wobei die Position des Verbinders 30 zu den Kanalelementen 20a, 20b einfach durch translatorische Verschiebung nachjustiert werden kann.

Während in Fig. 1 bis 13 Rastnasen und Rastnuten dargestellt sind, die sich in Längsrichtung entlang der gesamten Länge des Kanalelements 20, 20a, 20b oder des Verbinders 30 erstrecken, können Eingriffselemente mit alternativen Ausgestaltungen verwendet werden. Diese können sich entlang der gesamten Länge des Kanalelements 20, 20a, 20b oder des Verbinders 30 erstrecken. Alternativ können die Eingriffselemente der Kanalelemente 20, 20a, 20b und/oder die Verbindereingriffselemente des Verbinders 30 nur in den Bereichen vorgesehen sein, in denen eine Kopplung des Verbinders 30 an den Kanalelementen 20, 20a, 20b erforderlich ist. Ein Eingriff zur Sicherung des Verbinders 30 und der Kanalelemente 20, 20a, 20b muss nicht gleichzeitig an mehreren Positionen entlang der Seitenwände erfolgen.

Fig. 14 zeigt einen Querschnitt eines Kanalelements 20 und eines darauf angebrachten Verbinders 30. Eingriffsanordnungen 71, 72 verschiedener Ausgestaltung können vorgesehen sein. Beispielsweise kann eine Eingriffsanordnung 71 ein L-förmiges Eingriffselement des Kanalelements 20 aufweisen, das in eine korrespondierende Aufnahme im Verbinder 30 einrastbar ist. Eine optionale weitere Eingriffsanordnung 72, die an der entgegengesetzten Seitenwand des Verbinders 30 und des Kanalelements 20 vorgesehen sein kann, kann eine von der Eingriffsanordnung 71 verschiedene Ausgestaltung aufweisen. Alternativ kann auch nur eine der Eingriffsanordnungen 71, 72 vorgesehen sein.

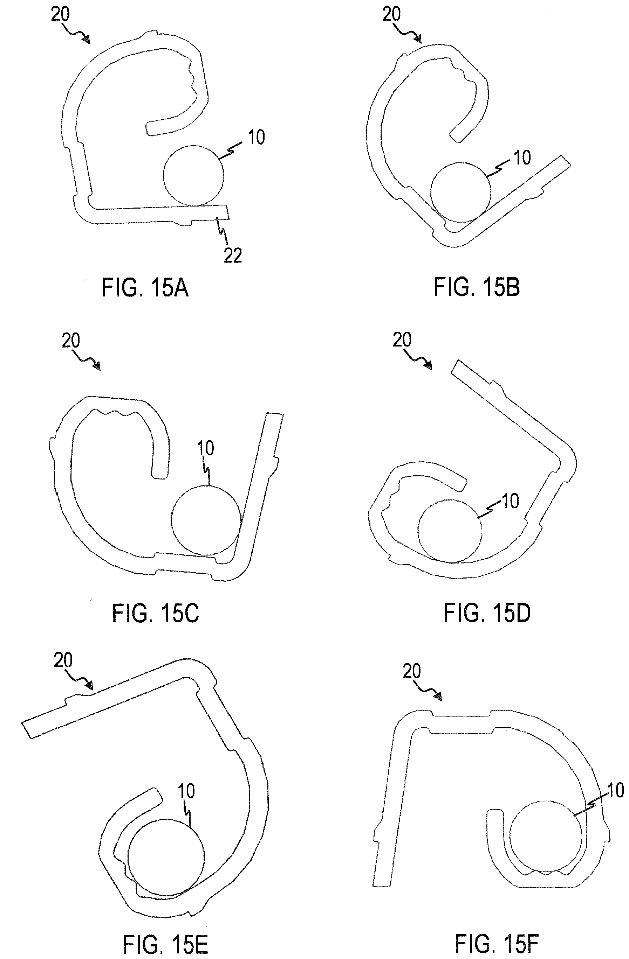

Fig. 15A-F zeigen verschiedene Stadien der Verwendung eines Kanalelements 20 zur Verlegung eines Kabelkanals. Das Kabel 10 kann bereits ausgelegt sein, beispielsweise auf dem Boden entlang eines Verkehrswegs. Das Kanalelement 20 wird so entlang eines Abschnitts des Kabels 10 positioniert, dass das Kabel 10 an der Einführöffnung 23 an der Innenseite des Führungsabschnitts 22 aufliegt (Fig. 15A). Ein planarer Abschnitt des Führungsabschnitts 22 kann dabei flach auf dem Boden aufliegen.

Das Kanalelement 20 wird anschließend entlang einer Längsachse gedreht (Fig. 15B-E). Dabei führt der Führungsabschnitt 22 das Kabel 10 von der Einführöffnung 23 bis zum Auflageabschnitt 21.

In der Montageposition (Fig. 15F) liegt das Kabel 10 auf dem Auflageabschnitt 21 so auf, dass der Auflageabschnitt 21 mit dem zweiten Bereich 25 ein Zurückgleiten des Kabels 10 zur Einführöffnung verhindert.

Nach dem Einführen der Hülse 41 und des Verankerungselements 45 wirken die Hülse 41 und das Verankerungselement 45 mit, ein Zurückgleiten des Kabels 10 zur Einführöffnung 23 zu verhindern.

Zum Verlegen eines Kabelkanals können die in Fig. 15A-F dargestellten Schritte für mehrere verschiedene Kanalelemente 20a, 20b wiederholt werden, die durch Verbinder 30 miteinander verbunden werden. Beispielsweise kann
- ein Kanalelement 20 um das bereits ausgelegte Kabel 10 gedreht wird, so dass das Kabel 10 zum Auflageabschnitt 21 gleitet und
- ein Verbinder 30 auf das Kanalelement 20 geschoben oder geclipst wird,
und die beiden oben genannten Schritte können wiederholt werden, wobei sequenziell neue Kanalelemente und Verbinder hinzugefügt werden können.

Die Kanalelemente 20 und Verbinder 30 können zur Führung eines einzigen Kabels verwendet werden, ohne darauf beschränkt zu sein.

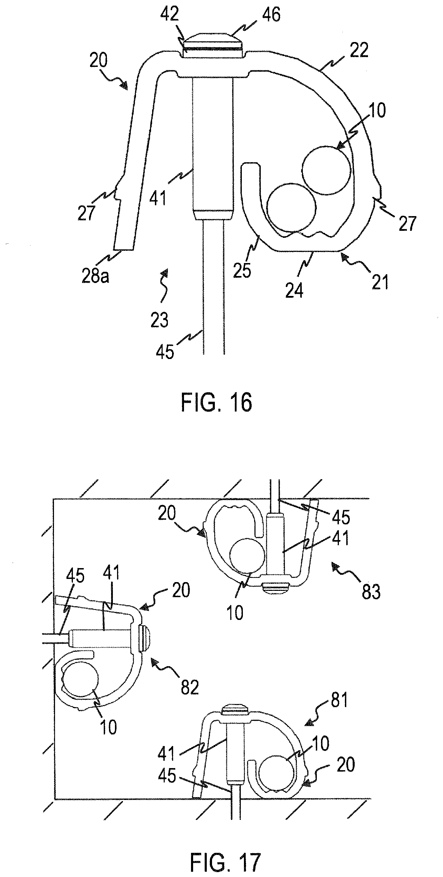

Fig. 16 zeigt einen Kabelkanal mit einem Kanalelement 20, das mehrere Kabel 10 führt. Während in Fig. 16 zwei Kabel 10 dargestellt sind, können die Kanalelemente 20 und Verbinder 30 zur Führung von drei, vier oder mehr als vier Kabeln verwendet werden.

Die Kanalelemente 20 und Verbinder 30 können an verschiedenen Montagepositionen verwendet werden.

Fig. 17 zeigt einen Kabelkanal 81, der als Bodenkanal verlegt ist und erfindungsgemäße Kanalelemente 20 und Verbinder aufweist. Alternativ oder zusätzlich können die Kanalelemente 20 und Verbinder für einen Wandkanal 82 oder einen Deckenkanal 83 verwendet werden.

Das Kanalelement 20 kann verschiedene geometrische Formen und Ausgestaltungen aufweisen. Das Kanalelement 20 kann im Querschnitt (in einer Querschnittsebene quer zur Längsachse) eine im Wesentlichen spiralförmige Grundform (Fig. 1-5) oder eine G-Form aufweisen (Fig. 14).

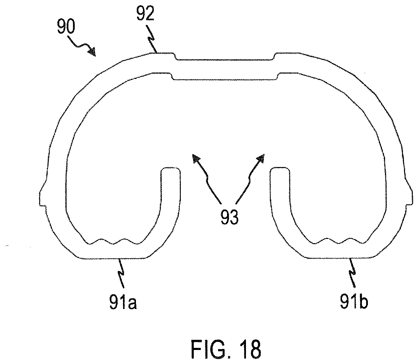

Fig. 18 ist eine Querschnittsansicht eines Kanalelements 90 nach einem weiteren Ausführungsbeispiel. Das Kanalelement weist im Querschnitt eine C-Form auf. Das Kanalelement weist zwei Auflageabschnitte 91a, 91b auf. Ein Kabel oder mehrere Kabel können wahlweise an einem oder beiden der Auflageabschnitte 91a, 91b positioniert werden. Ein Kabel oder mehrere Kabel können über eine Einführöffnung 23 zwischen den Auflageabschnitten 91a, 91b eingeführt und dann auf einem der Auflageabschnitte 91a, 91b positioniert werden.

Das Kanalelement 20, 90 kann verschiedene Abmessungen aufweisen. Das Kanalelement 20, 90 kann als Element mit relativ großer Länge gefertigt und dann konfektioniert werden. Im montierten Zustand kann das Kanalelement 20, 90 eine Länge von mindestens 1 m aufweisen. Der Auflageabschnitt 21, 91a, 91b kann eine Breite von 5 mm bis 100 mm quer zur Länge aufweisen. Das Kanalelement kann aus einem Material mit einer Materialstärke von 1 mm bis 10 mm bestehen.

Das Kanalelement und der Verbinder können zur Verlegung eines GFK-Kabelkanals verwendet werden. Beispielsweise können das Kanalelement und der Verbinder zur Verlegung eines GFK-Kabelkanals entlang einer Gleisanlage oder eines anderen Verkehrswegs verwendet werden, ohne hierauf beschränkt zu sein. Das Kanalelement und der Verbinder können zur Verlegung eines GFK-Kabelkanals für eine elektrische Leitung oder eines Lichtwellenleiters entlang einer Gleisanlage oder eines anderen Verkehrswegs verwendet werden, ohne hierauf beschränkt zu sein. Das Kanalelement und der Verbinder können alternativ auch im Gebäudeinneren verwendet werden und/oder können aus anderen Materialien als GFK bestehen, beispielsweise aus Kunststoff oder einem Metall.

Verschiedene Wirkungen und Vorteile werden durch die erfindungsgemäßen Bauteile, Kanäle und Verfahren erzielt. Ein Kanal zum Führen eines Kabels kann schnell verlegt werden. Ein Schutz beispielsweise vor mechanischer Fremdeinwirkung und/oder UV-Strahlung wird erreicht, ohne dass ein separates Deckelelement zum Schließen des Kanals benötigt wird.

Die Bauteile, Kanäle und Verfahren können auch zum Führen von Schläuchen oder Rohren verwendet werden und sind nicht auf die Verwendung zum Führen von Kabeln beschränkt.

## Patentansprüche

1. Kanalelement (20; 90), aufweisend:
einen Auflageabschnitt (21; 91a, 91b) für wenigstens ein Kabel (10) und
einen Führungsabschnitt (22; 92), der den Auflageabschnitt (21; 91a, 91b) überdeckt und einstückig mit dem Auflageabschnitt (21; 91a, 91b) ausgebildet ist, zum Führen des wenigstens einen Kabels (10) zum Auflageabschnitt (21; 91a, 91b) bei Drehung des Kanalelements (20; 90) um seine Längsachse,
wobei zwischen dem Führungsabschnitt (22; 92) und dem Auflageabschnitt (21; 91a, 91b) eine Einführöffnung (23; 93) zum Einführen des wenigstens einen Kabels (10) in das Kanalelement (20; 90) gebildet ist, die sich entlang einer Länge des Kanalelements (20; 90) erstreckt und von dem Führungsabschnitt (22; 92) und dem Auflageabschnitt (21; 91a, 91b) begrenzt wird,
**dadurch gekennzeichnet, dass**
das Kanalelement ferner eine über der Einführöffnung (23; 93) angeordnete Verankerungsöffnung (29) oder mehrere über der Einführöffnung (23; 93) angeordnete Verankerungsöffnungen (29) aufweist, durch die jeweils ein Verankerungselement (45) durchführbar ist.

2. Kanalelement (20; 90) nach Anspruch 1, wobei wenigstens ein Teil des Führungsabschnitts (22; 92) eine zum Auflageabschnitt (21; 91a, 91b) zeigende gekrümmte Innenoberfläche aufweist.

3. Kanalelement (20; 90) nach Anspruch 2, wobei die gekrümmte Innenoberfläche den Auflageabschnitt (21; 91a, 91b) bogenartig überdeckt.

4. Kanalelement (20; 90) nach einem der vorhergehenden Ansprüche, wobei der Auflageabschnitt (21; 91a, 91b) einen ersten Bereich (24), der eine Auflagefläche für das Kabel (10) definiert, und einen vom ersten Bereich (24) abragenden zweiten Bereich (25) aufweist, der die Einführöffnung (23; 93) begrenzt.

5. Kanalelement (20; 90) nach einem der vorhergehenden Ansprüche, wobei der Auflageabschnitt (21; 91a, 91b) ein Wasserablaufelement (26) oder mehrere Wasserablaufelemente (26) aufweist.

6. Kanalelement (20; 90) nach einem der vorhergehenden Ansprüche, wobei das Kanalelement (20; 90) ein Eingriffselement (27) oder mehrere Eingriffselemente (27) für einen Eingriff, insbesondere eine Verrastung, mit einem Verbinder (30) aufweist.

7. Kanalelement (20; 90) nach einem der vorhergehenden Ansprüche, wobei das Kanalelement (20; 90) aus einem glasfaserverstärkten Kunststoff, einem Kunststoff oder einem Metall besteht.

8. Kanalelement (20; 90) nach einem der vorhergehenden Ansprüche, wobei das Kanalelement (20; 90) eine Länge von mindestens 1 m aufweist und/oder wobei der Auflageabschnitt (21; 91a, 91b) eine Breite von 5 mm bis 100 mm quer zur Länge hat.

9. Kanalelement (20; 90) nach einem der vorhergehenden Ansprüche, wobei das Kanalelement (20; 90) im Querschnitt eine im Wesentlichen spiralförmige Grundform, eine G-förmige Grundform oder eine C-förmige Grundform aufweist.

10. Kanal, aufweisend:
ein erstes Kanalelement (20a) nach einem der vorhergehenden Ansprüche,
ein zweites Kanalelement (20b) nach einem der vorhergehenden Ansprüche und
einen Verbinder (30), der für eine Kopplung mit dem ersten Kanalelement (20a) und dem zweiten Kanalelement (20b) ausgestaltet ist.

11. Kanal nach Anspruch 10, wobei der Verbinder (30) eine über dem ersten Kanalelement (20a) positionierte erste Sichtöffnung (31) zum Überprüfen einer Position des ersten Kanalelements (20a) am Verbinder (30), eine über dem zweiten Kanalelement (20b) positionierte zweite Sichtöffnung (32) zum Überprüfen einer Position des zweiten Kanalelements (20b) am Verbinder (30) und eine zwischen der ersten Sichtöffnung (31) und der zweiten Sichtöffnung (32) angeordnete Verbinderverankerungsöffnung (33) zum Durchführen eines Verankerungselements (45), insbesondere eines in einer Hülse (41) geführten Verankerungselements (45), aufweist.

12. Kanal nach Anspruch 10 oder 11, wobei der Verbinder (30) ein Verbindereingriffselement (37) oder mehrere Verbindereingriffselemente (37) für einen Eingriff, insbesondere eine Verrastung, mit dem ersten Kanalelement (20a) und dem zweiten Kanalelement (20b) aufweist.

13. Kanal nach einem der Ansprüche 10 bis 12, ferner aufweisend:
mindestens ein Verankerungselement (45) zur Verankerung des ersten Kanalelements (20a), des zweiten Kanalelements (20b) und des Verbinders (30).

14. Verfahren zum Installieren eines Kabels (10) oder mehrerer Kabel in einem Kabelkanal, der ein Kanalelement (20; 90) mit einem Auflageabschnitt (21; 91a, 91b) für das Kabel (10) oder die Kabel und einem Führungsabschnitt (22; 92) aufweist, wobei der Führungsabschnitt (22; 92) den Auflageabschnitt (21; 91a, 91b) überdeckt und einstückig mit dem Auflageabschnitt (21; 91a, 91b) ausgebildet ist, wobei das Verfahren aufweist:
Positionieren des Kanalelements (20; 90) an dem Kabel (10) oder an den Kabeln derart, dass das Kabel (10) oder die Kabel in einer Einführöffnung (23; 93) zum Einführen des Kabels (10) oder der Kabel in das Kanalelement (20; 90) liegt bzw. liegen, wobei sich die Einführöffnung (23; 93) entlang einer Länge des Kanalelements (20; 90) erstreckt, und
Drehen des Kanalelements (20; 90) um eine Längsachse des Kabels (10) oder der Kabel, wobei der Führungsabschnitt (22; 92) das Kabel (10) oder die Kabel zum Auflageabschnitt (21; 91a, 91b) führt,
wobei das Kanalelement (20; 90) ein Kanalelement (20; 90) nach einem der Ansprüche 1 bis 9 ist.

15. Verfahren nach Anspruch 14, wobei das Kanalelement (20; 90) um wenigstens 90°, wenigstens 180° oder um wenigstens 250° gedreht wird.

16. Verfahren nach Anspruch 14 oder 15, wobei das Verfahren ferner aufweist:
Befestigen des Kanalelements (20a) an einem weiteren Kanalelement (20b) unter Verwendung eines Verbinders (30), wobei der Verbinder (30) eine erste Sichtöffnung (31) zum Überprüfen einer Position des Kanalelements (20; 90) am Verbinder (30) und eine weitere Sichtöffnung (32) zum Überprüfen einer Position des weiteren Kanalelements (20; 90) am Verbinder (30) aufweist, und
Verankern des Verbinders (30), wobei ein Verankerungselement (45) durch eine zwischen der ersten Sichtöffnung (31) und der zweiten Sichtöffnung (32) angeordnete Verbinderverankerungsöffnung (33) geführt wird.

## Claims

1. A channel element (20; 90) comprising:
a support portion (21; 91a; 91b) for at least one cable (10) and
a guiding portion (22; 92) covering the support portion (21; 91a; 91b) and configured integral with the support portion (21; 91a, 91b) to guide the at least one cable (10) to the support portion (21; 91a, 91b) when the channel element (20; 90) rotates around its longitudinal axis,
wherein between the guiding portion (22; 92) and the support portion (21; 91a, 91b) an insertion opening (23; 93) for inserting the at least one cable (10) into the channel element (20; 90) is formed, which extends along a length of the channel element (20; 90) and is limited by the guiding portion (22; 92) and the support portion (21; 91a, 91b),
**characterized in that**
the channel element further comprises an anchoring portion (29) arranged above the insertion opening (23; 93) or a plurality of anchoring portions (29) arranged above the insertion opening (23; 93), through each of which an anchoring element (45) can be guided.

2. The channel element (20; 90) according to claim 1, wherein at least a portion of the guiding portion (22; 92) comprises a curved inner surface which faces the support portion (21; 91a, 91b).

3. The channel element (20; 90) according to claim 2, wherein the curved inner surface covers the support portion (21; 91a, 91b) in an arch-shaped manner.

4. The channel element (20; 90) according to any of the preceding claims, wherein the support portion (21; 91a, 91b) comprises a first region (24) which defines a support surface for the cable (10) and a second region (25) which protrudes from the first region (24), which limits the insertion opening (23; 93).

5. The channel element (20; 90) according to any of the preceding claims, wherein the support portion (21; 91a, 91b) comprises a water drainage element (26) or a plurality of water drainage elements (26).

6. The channel element (20; 90) according to any of the preceding claims, wherein the channel element (20; 90) comprises an engagement element (27) or a plurality of engagement elements (27) for an engagement, in particular a catch mechanism, with a connector (30).

7. The channel element (20; 90) according to any of the preceding claims, wherein the channel element (20; 90) consists of a glass-fibre-reinforced plastic, a plastic, or a metal.

8. The channel element (20; 90) according to any of the preceding claims, wherein the channel element (20; 90) comprises a length of at least 1 m and/or wherein the support portion (21; 91a, 91b) has a width of 5 mm to 100 mm across the length.

9. The channel element (20; 90) according to any of the preceding claims, wherein the channel element (20; 90) has, in cross-section, a substantially spiral basic shape, a G-shaped basic shape or a C-shaped basic shape.

10. A channel comprising:
a first channel element (20a) according to any of the preceding claims,
a second channel element (20b) according to any of the preceding claims and
a connector (30) which is configured to be coupled with the first channel element (20a) and the second channel element (20b).

11. The channel according to claim 10, wherein the connector (30) comprises a first sight opening (31) positioned above the first channel element (20a) for checking a position of the first channel element (20a) at the connector (30), a second sight opening (32) positioned above the second channel element (20b) for checking a position of the second channel element (20b) at the connector (30) and a connector anchoring opening (33) arranged between the first sight opening (31) and the second sight opening (32) for guiding an anchoring element (45), in particular an anchoring element (45) guided in a sleeve (41), therethrough.

12. The channel according to claim 10 or 11, wherein the connector (30) comprises a connector engagement element (37) or a plurality of connector engagement elements (37) for an engagement, in particular a catch mechanism, with the first channel element (20a) and the second channel element (20b).

13. The channel according to any of claims 10 to 12, further comprising:
at least one anchoring element (45) for anchoring the first channel element (20a), the second channel element (20b) and the connector (30).

14. A method for installing a cable (10) or a plurality of cables in a cable channel which comprises a canal element (20; 90) with a support portion (21; 91a, 91b) for the cable (10) or the cables and a guiding portion (22; 92), wherein the guiding portion (22; 92) covers the support portion (21; 91a, 91b) and is configured integral with the support portion (21; 91a, 91b), wherein the method comprises:
positioning the channel element (20; 90) at the cable (10) or at the cables such that the cable (10) or the cables lies or lie in an insertion opening (23; 93) for inserting the cable (10) or the cables into the channel element (20; 90), wherein the insertion opening (23; 93) extends along a length of the channel element (20; 90) and
rotating the channel element (20; 90) around a longitudinal axis of the cable (10) or the cables, wherein the guiding portion (22; 92) guides the cable (10) or the cables to the support portion (21; 91a, 91b),
wherein the channel element (20; 90) is a channel element (20; 90) according to one of claims 1 to 9.

15. The method according to claim 14, wherein the channel element (20; 90) is rotated around at least 90°, at least 180° or around at least 250°.

16. The method according to claim 14 or 15, wherein the method further comprises:
attaching the channel element (20a) to a further channel element (20b) by using a connector (30), wherein the connector (30) comprises a first sight opening (31) for checking a position of the channel element (20; 90) at the connector (30) and a further sight opening (32) for checking a position of the further channel element (20; 90) at the connector (30), and
anchoring the connector (30), wherein an anchoring element (45) is guided through a connector anchoring opening (33) arranged between the first sight opening (31) and the second sight opening (32).

## Revendications

1. Elément de canal (20 ; 90) présentant :
une section de support (21 ; 91a, 91b) pour au moins un câble (10) et
une section de guidage (22 ; 92), qui recouvre la section de support (21 ; 91a, 91b) et est réalisée d'un seul tenant avec la section de support (21 ; 91a, 91b), pour guider l'au moins un câble (10) vers la section de support (21 ; 91a, 91b) lors de la rotation de l'élément de canal (20 ; 90) autour de son axe longitudinal,
dans lequel une ouverture d'introduction (23 ; 93) destinée à introduire l'au moins un câble (10) dans l'élément de canal (20 ; 90) est formée entre la section de guidage (22 ; 92) et la section de support (21 ; 91a, 91b), laquelle s'étend le long d'une longueur de l'élément de canal (20 ; 90) et est délimitée par la section de guidage (22 ; 92) et la section de support (21 ; 91a, 91b),
**caractérisé en ce que**
l'élément de canal présente en outre une ouverture d'ancrage (29) disposée au-dessus de l'ouverture d'introduction (23 ; 93) ou plusieurs ouvertures d'ancrage (29) disposées au-dessus de l'ouverture d'introduction (23 ; 93), à travers lesquelles respectivement un élément d'ancrage (45) peut être guidé.

2. Elément de canal (20 ; 90) selon la revendication 1, dans lequel au moins une partie de la section de guidage (22 ; 92) présente une surface intérieure incurvée pointant en direction de la section de support (21 ; 91a, 91b).

3. Elément de canal (20 ; 90) selon la revendication 2, dans lequel la surface intérieure incurvée recouvre à la manière d'un arc la section de support (21 ; 91a, 91b).

4. Elément de canal (20 ; 90) selon l'une quelconque des revendications précédentes, dans lequel la section de support (21 ; 91a, 91b) présente une première zone (24), qui définit une surface de support pour le câble (10), et une deuxième zone (25) dépassant de la première zone (24), qui délimite l'ouverture d'introduction (23 ; 93).

5. Elément de canal (20 ; 90) selon l'une quelconque des revendications précédentes, dans lequel la section de support (21 ; 91a, 91b) présente un élément de drainage d'eau (26) ou plusieurs éléments de drainage d'eau (26).

6. Elément de canal (20 ; 90) selon l'une quelconque des revendications précédentes, dans lequel l'élément de canal (20 ; 90) présente un élément de prise (27) ou plusieurs éléments de prise (27) pour une prise, en particulier un enclenchement, avec un connecteur (30).

7. Elément de canal (20 ; 90) selon l'une quelconque des revendications précédentes, dans lequel l'élément de canal (20 ; 90) est constitué d'une matière plastique renforcée par des fibres de verre, d'une matière plastique ou d'un métal.

8. Elément de canal (20 ; 90) selon l'une quelconque des revendications précédentes, dans lequel l'élément de canal (20 ; 90) présente une longueur d'au moins 1 m et/ou dans lequel la section de support (21 ; 91a, 91b) a une largeur de 5 mm à 100 mm de manière transversale par rapport à la longueur.

9. Elément de canal (20 ; 90) selon l'une quelconque des revendications précédentes, dans lequel l'élément de canal (20 ; 90) présente dans la section transversale une forme de base sensiblement en spirale, une forme de base en G ou une forme de base en C.

10. Canal présentant :
un premier élément de canal (20a) selon l'une quelconque des revendications précédentes,
un deuxième élément de canal (20b) selon l'une quelconque des revendications précédentes, et
un connecteur (30), qui est configuré pour un couplage au premier élément de canal (20a) et au deuxième élément de canal (20b).

11. Canal selon la revendication 10, dans lequel le connecteur (30) présente une première ouverture d'inspection (31) positionnée au-dessus du premier élément de canal (20a), destinée à surveiller une position du premier élément de canal (20a) sur le connecteur (30), une deuxième ouverture d'inspection (32) positionnée au-dessus du deuxième élément de canal (20b), destinée à surveiller une position du deuxième élément de canal (20b) sur le connecteur (30) et une ouverture d'ancrage de connecteur (33) disposée entre la première ouverture d'inspection (31) et la deuxième ouverture d'inspection (32), destinée à faire passer un élément d'ancrage (45), en particulier un élément d'ancrage (45) guidé dans une douille (41).

12. Canal selon la revendication 10 ou 11, dans lequel le connecteur (30) présente un élément de prise de connecteur (37) ou plusieurs éléments de prise de connecteur (37) pour une prise, en particulier un enclenchement, avec le premier élément de canal (20a) et le deuxième élément de canal (20b).

13. Canal selon l'une quelconque des revendications 10 à 12, présentant en outre :
au moins un élément d'ancrage (45) destiné à ancrer le premier élément de canal (20a), le deuxième élément de canal (20b) et le connecteur (30).

14. Procédé destiné à installer un câble (10) ou plusieurs câbles dans un canal de câble, qui présente un élément de canal (20 ; 90) avec une section de support (21 ; 91a, 91b) pour le câble (10) ou les câbles et une section de guidage (22 ; 92), dans lequel la section de guidage (22 ; 92) recouvre la section de support (21 ; 91a, 91b) et est réalisée d'un seul tenant avec la section de support (21 ; 91a, 91b), dans lequel le procédé présente :
le positionnement de l'élément de canal (20 ; 90) sur le câble (10) ou les câbles de telle manière que le câble (10) ou les câbles se situe ou se situent dans une ouverture d'introduction (23 ; 93) destinée à introduire le câble (10) ou les câbles dans l'élément de canal (20 ; 90), dans lequel l'ouverture d'introduction (23 ; 93) s'étend le long d'une longueur de l'élément de canal (20 ; 90), et
la rotation de l'élément de canal (20 ; 90) autour d'un axe longitudinal du câble (10) ou des câbles, dans lequel la section de guidage (22 ; 92) guide le câble (10) ou les câbles vers la section de support (21 ; 91a, 91b),
dans lequel l'élément de canal (20 ; 90) est un élément de canal (20 ; 90) selon l'une quelconque des revendications 1 à 9.

15. Procédé selon la revendication 14, dans lequel l'élément de canal (20 ; 90) est tourné d'au moins 90°, d'au moins 180° ou d'au moins 250°.

16. Procédé selon la revendication 14 ou 15, dans lequel le procédé présente en outre :
la fixation de l'élément de canal (20a) sur un autre élément de canal (20b) en utilisant un connecteur (30), dans lequel le connecteur (30) présente une première ouverture d'inspection (31) destinée à surveiller une position de l'élément de canal (20 ; 90) sur le connecteur (30) et une autre ouverture d'inspection (32) destinée à surveiller une position de l'autre élément de canal (20 ; 90) sur le connecteur (30), et
l'ancrage du connecteur (30), dans lequel un élément d'ancrage (45) est guidé par une ouverture d'ancrage de connecteur (33) disposée entre la première ouverture d'inspection (31) et la deuxième ouverture d'inspection (32).
